# EUROPEAN PATENT SPECIFICATION

(11) **EP 3 971 805 B1**
(45) Date of publication and mention of the grant of the patent: **18.12.2024**
(21) Application number: 21166517.9
(22) Date of filing: 01.04.2021
(51) Int. Cl.: G06Q 10/06, G06Q 10/10

(54) **GENERATING WORKFLOW, REPORT, INTERFACE, CONVERSION, ENHANCEMENT, AND FORMS (WRICEF) OBJECTS FOR ENTERPRISE SOFTWARE**
ERZEUGUNG VON WORKFLOW-, BERICHTS-, SCHNITTSTELLEN-, KONVERTIERUNGS-, VERBESSERUNGS- UND FORMULAR(WRICEF)-OBJEKTEN FÜR UNTERNEHMENSSOFTWARE
GÉNÉRATION D'OBJETS DE FLUX DE TRAVAIL, DE RAPPORTS, D'INTERFACE, DE CONVERSION, D'AMÉLIORATION ET DE FORMULAIRES (WRICEF) POUR LOGICIELS D'ENTREPRISE

(30) Priority: 17.09.2020 EP 20290064; 24.11.2020 US 202017103164
(43) Date of publication of application: 23.03.2022
(73) Proprietor: Accenture Global Solutions Limited, Dublin 4 (IE)
(72) Inventor: LIEGARD, Michel-Etienne, 94270 Le Kremlin Bicêtre (FR); PIGANEAU, Aymeric, 75012 Paris (FR); GUIMBELLOT, Stephanie, 75010 Paris (FR)
(74) Representative: Black, Diego

(56) References cited:
- EP-A1- 3 553 714
- US-A1- 2018 082 228
- US-A1- 2020 012 582

## Description

### CROSS-REFERENCE TO RELATED APPLICATIONS

This Patent Application claims priority to European Patent Application No. 20290064.3, filed on September 17, 2020, and entitled "GENERATING WORKFLOW, REPORT, INTERFACE, CONVERSION, ENHANCEMENT, AND FORMS (WRICEF) OBJECTS FOR ENTERPRISE SOFTWARE," and U.S. Patent Application No. 17/103,164, filed on November 24, 2020, and entitled "GENERATING WORKFLOW, REPORT, INTERFACE, CONVERSION, ENHANCEMENT, AND FORMS (WRICEF) OBJECTS FOR ENTERPRISE SOFTWARE,".

### BACKGROUND

Enterprise software is computer software used to satisfy needs of an organization rather than individual users. Such organizations may include businesses, schools, interest-based user groups, clubs, charities, and governments. Enterprise software is an integral part of a computer-based information system, and a collection of such software is called an enterprise system.
The following documents may be considered as disclosing the background art.
US 2020/012582 A1 discloses a device that may receive, from a user device, a request for a code assessment of a proposed change to an enterprise resource planning (ERP) system of an organization to identify an impact of implementing the proposed change on custom code associated with the ERP system. The device may obtain data identifying custom items associated with the custom code from a data structure associated with the ERP system. The device may generate custom code metadata for the custom items by performing error checks to determine whether the custom items will cause errors after the proposed change is implemented. The device may generate an assessment report for the code assessment by processing the custom code metadata. The device may provide the assessment report for display on an interface of the user device, and may perform actions to permit the proposed change to be implemented without the errors occurring.
US 2018/082228 A1 discloses a device that may receive requests for a set of project management office (PMO) services that are hosted by a set of enterprise project management (EPM) systems. The requests may include a first request and the first request includes a PMO service identifier. The device may analyze a set of configuration files to identify a configuration file associated with a PMO service of the set of PMO services that is associated with the first request. The configuration file may be associated with the PMO service identifier. The device may execute navigation instructions included in the configuration file to obtain, modify, or create PMO service data by interacting with a server device that hosts the PMO service. The device may perform, using the PMO service data and one or more configuration parameters included in the configuration file, one or more actions associated with delivering the PMO service.
EP 3 553 714 A1 discloses methods, systems, and apparatus, including computer programs encoded on a computer storage medium, for receiving requirements data for a first enterprise resource planning (ERP) project and accessing a data repository that includes multiple templates. A subset of the templates include activity templates and each template is associated with at least one other ERP project. A system identifies activity templates based on the requirements data. Each identified activity template defines deliverables for performing the first ERP project. The system receives user input for validating an identified activity template by referencing the requirements data. The system selects an activity template in response to receiving the user input that validates the activity template. The system uses the selected activity template to generate a first deliverable for executing the first ERP project. The first deliverable is represented by a data object in the activity template that receives workflow data for execution of the first deliverable.

### SUMMARY

The invention is defined by the independent claims.

Dependent claims provide preferred embodiments of the invention.

### BRIEF DESCRIPTION OF THE DRAWINGS

Figs. 1A-1F are diagrams of an example implementation described herein.
Fig. 2 is a diagram of an example environment in which systems and/or methods described herein may be implemented.
Fig. 3 is a diagram of example components of one or more devices of Fig. 2.
Fig. 4 is a flowchart of an example process for generating WRICEF objects for enterprise software.

### DETAILED DESCRIPTION

The following detailed description of example implementations refers to the accompanying drawings. The same reference numbers in different drawings may identify the same or similar elements.

Services provided by enterprise software are typically business-oriented tools, such as online shopping, online payment processing, interactive product catalogues, automated billing systems, security, business process management, enterprise content management, information technology service management, customer relationship management, enterprise resource planning, business intelligence, project management, collaboration, human resource management, manufacturing, occupational health and safety, enterprise application integration, and enterprise forms automation. Enterprise software may utilize enterprise system objects, such as workflow, report, interface, conversion, enhancement, and forms (WRICEF) objects. An enterprise object may include any type of custom development or enhancement for the enterprise software. An enterprise object may include configuration units that group all configuration, development, and documentation that belongs to an enhancement. However, current methods for generating enterprise objects are time consuming, manpower intensive, and generate customized enterprise objects that cannot be shared and/or continuously tested. Thus, current methods for generating enterprise objects waste human resources, computing resources (e.g., processing resources, memory resources, communication resources, and/or the like), networking resources, and/or the like associated with manually generating enterprise objects, generating enterprise objects that cannot be shared, generating enterprise objects that do not scale, and/or the like.

Some implementations described herein relate to a generation system that generates WRICEF objects for enterprise software. For example, the generation system may receive user request data and may receive pre-defined technical object content data (e.g., data associating a field business partner in a table) from a library. The generation system may retrieve a predefined interface format data from a first database based on the user request data and may retrieve a predefined business rule from a second database. The generation system may map the technical object content data to the predefined interface format data based on the predefined business rule and may generate an enterprise object based on the mapped technical object content data and the predefined interface format data. If there is no existing mapping, the generation system may receive creation data from a user and may generate the enterprise object based on the creation data. The generation system may generate a document (e.g., a technical document) based on the enterprise object and may generate code based on the enterprise object.

In this way, the generation system may quickly and automatically generate enterprise objects for enterprise software. For example, the generation system may map the technical object content data with the predefined interface format data based on the predefined business rule and may generate an enterprise object based on the mapped technical object content data and the predefined interface format data. Thus, the generation system conserves human resources, computing resources, networking resources, and/or the like that would otherwise have been wasted by manually generating enterprise objects, generating enterprise objects that cannot be shared, generating enterprise objects that do not scale, and/or the like.

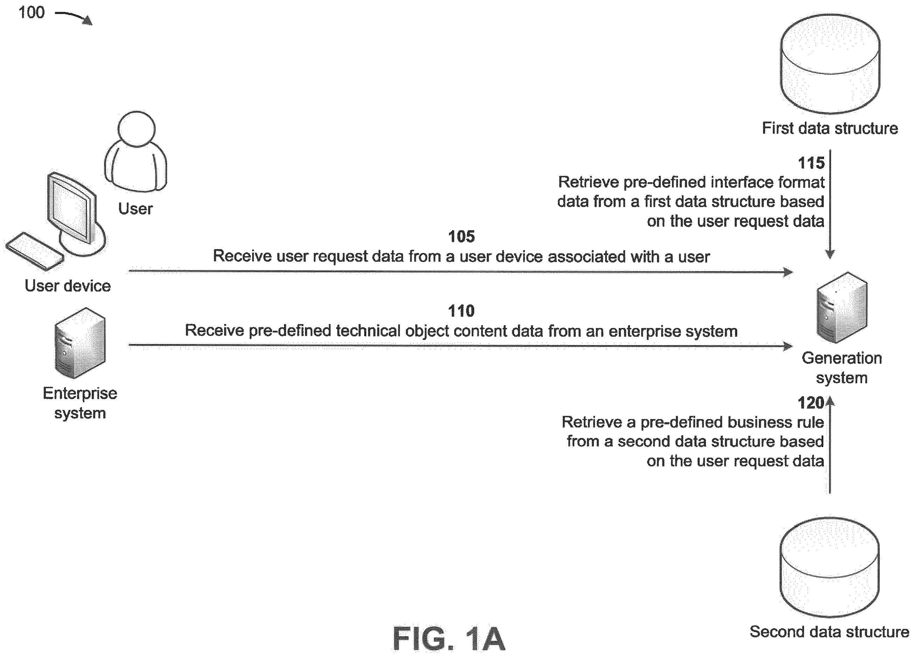

Figs. 1A-1F are diagrams of an example 100 associated with generating enterprise system objects (e.g., WRICEF objects) for enterprise software. As shown in Figs. 1A-1F, example 100 includes a user device and an enterprise system associated with a user and a generation system. The user device may include a laptop computer, a mobile telephone, a desktop computer, and/or the like utilized by the user. The enterprise system may include a device that collects and/or determines pre-defined technical object content data. The generation system may include a system that generates enterprise system objects for enterprise software, as described herein.

As shown in Fig. 1A, and by reference number 105, the generation system receives user request data from a user device associated with a user. The user request data may include information associated with generating an enterprise system object for enterprise software. In some implementations, the enterprise system object includes a WRICEF object. In some implementations, the enterprise system object includes a custom enhancement for enterprise software and configuration units. The configuration units may group configuration data, development data, and documentation associated with the custom enhancement.

Alternatively, and/or additionally, the enterprise system object may include a report for enterprise software, an outbound user interface for the enterprise software, an inbound user interface for the enterprise software, a conversion user interface for the enterprise software, an enhancement to a standard user interface for the enterprise software, an enhancement to a new user interface application for the enterprise software, a business intelligence transformation process for the enterprise software, a form for the enterprise software, a workflow for the enterprise software, and/or the like. The above-listed enterprise system objects are intended to be merely examples of types of enterprise system objects that may be used. In practice, the enterprise system object may include any one or more of the above-listed enterprise system objects and/or one or more other types of enterprise system objects not listed above.

The user request data may include information identifying a name of the enterprise system object, a description of the enterprise system object (e.g., read sales orders, call web service, import data to web service, export data to web server, and/or the like), a type of the enterprise system object (e.g., workflow, report, interface, conversion, enhancement, and/or form), and/or the like. In some implementations, the user request data may include information identifying a technical object associated with the enterprise system object. The technical object may include a function module comprising a sub-program for performing a function. The sub-program may include a set of reusable statements with importing parameters and/or exporting parameters. The enterprise system object may call the technical object to execute the sub-program to cause the function to be performed. As an example, the technical object may be a read sales orders technical object that can be called to read sales orders from a data structure.

In some implementations, the user request data includes a recording of activities performed by the user with the user device. The user may select, via a user interface associated with the generation system, an option to record activities of the user with the user device. The user may perform a series of actions via the user interface. For example, the user may cause a particular screen to be displayed, may insert data into a field of the particular screen, may add or remove a field from the particular screen, may reformat data contained in a particular field, and/or the like. The user device may generate a recording of the series of actions performed by the user. For example, the user device may generate a log record that includes information identifying the particular screen, the series of actions performed by the user, an order in which the series of actions were performed, and/or the like.

As shown by reference number 110, the generation system receives pre-defined technical object content data from an enterprise system. The generation system may determine a technical object associated with the enterprise system object based on the user request data. In some implementations, the user request data includes information identifying the technical object and the generation system determines the technical object associated with the enterprise system object based on the information identifying the technical object. In some implementations, the generation system determines a technical object associated with obtaining data (e.g., from a data structure stored in a memory of the enterprise system) and a technical object associated with providing data (e.g., to a third-party web service).

Alternatively, and/or additionally, the generation system determines the technical object based on the description of the enterprise system object included in the user request data. The generation system may utilize one or more natural language processing (NLP) techniques to process the description of the enterprise system object included in the user request data. The generation system may determine the technical object associated with the enterprise system object based on processing the description of the enterprise system object.

The generation system may request the technical object from the enterprise system. The enterprise system may receive the request from the generation system. The enterprise system may provide technical object content data associated with the technical object to the generation system based on the request. In some implementations, the technical object content data includes information associated with data obtained by the function associated with the technical object. For example, the technical object content data may include information identifying a field of a data structure from which data is obtained, information identifying a field of a data structure to which data is to be stored, and/or the like.

As shown by reference number 115, the generation system retrieves pre-defined interface format data from a first data structure based on the user request data. The interface format data may include information indicating how a service (e.g., a service for obtaining data from the enterprise system, a service for providing data to a web service, and/or the like) can be called, a parameter utilized by the service, a data structure returned by the service, a format of data exported to the service, a format of data imported from the service, a function provided by the service, and/or the like. For example, the interface format data may include a web services description language (WSDL) file, an intermediate document (Idoc), and/or the like. The service may be an internal service provided by the generation system and/or an external service (e.g., a WSDL web service) provided by another device.

The generation system may determine the interface format associated with the enterprise system object based on the user request data. For example, the generation system may determine a service associated with the enterprise system object based on the description of the enterprise system object and/or information indicating the technical object included in the user request data. The generation system may obtain the interface format associated with the service from the first data structure based on the service being associated with the enterprise system object.

As shown by reference number 120, the generation system retrieves a pre-defined business rule from a second data structure based on the user request data. The business rule may be associated with modifying data obtained by the generation system. For example, the business rule may be a rule associated with converting data from a first format to a second format, a rule associated with combining (e.g., adding, subtracting, multiplying, dividing, merging, and/or the like) data in a first field of a table with data in a second field of a table, and/or the like.

In some implementations, the business rule may be identified in the user request data. Alternatively, and/or additionally, the generation system may determine the business rule based on the technical object associated with the enterprise system object. As an example, the technical object may be associated with retrieving data from a data structure stored in a memory of the enterprise system and providing the data to an external source (e.g., a third-party web service). The generation system may identify a business rule associated with the technical object (e.g., a business rule associated with converting the data from a first format to a second format) based on accessing a data structure storing information mapping technical objects to associated business rules. The generation system may obtain the business rule from the second data structure based on the business rule being associated with the technical object.

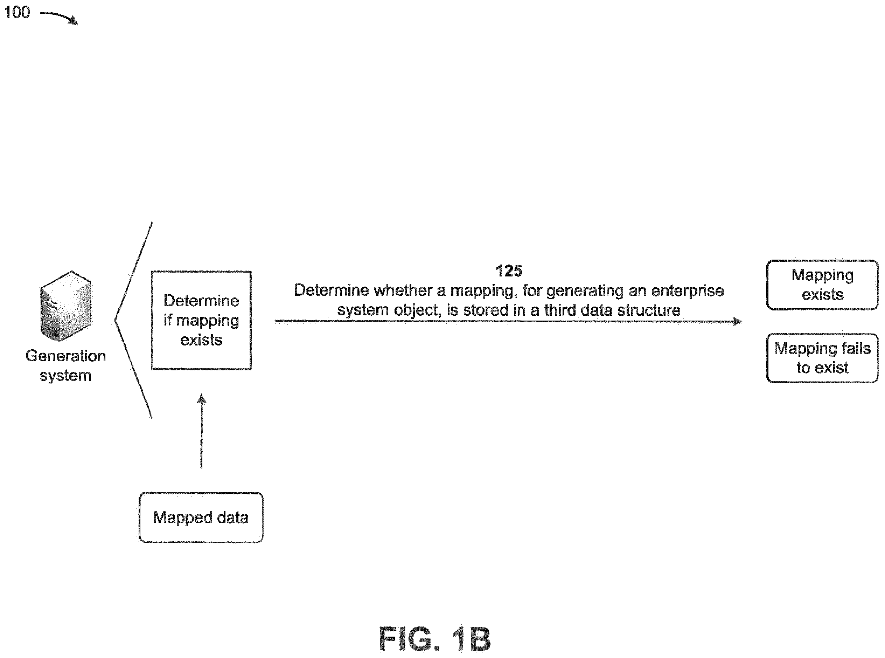

As shown in Fig. 1B, and by reference number 125, the generation system determines whether a mapping, for generating an enterprise system object, is stored in a third data structure. The mapping may include information associating data fields associated with the technical object and data fields associated with the pre-defined interface format data. As an example, the technical object may be associated with a function for obtaining a first field of data (e.g., sales data) from the enterprise system and exporting the first field of data to a web service. The pre-defined interface format data may include information identifying a second field of data associated with sales data. The mapping may include information mapping first field of data to the second field of data.

The third data structure may store information associating mappings with technical objects and/or pre-defined interface format data. The generation system may access the third data structure and may determine whether the mapping is stored in the data structure based on the technical object and/or the pre-defined interface format data associated with the enterprise system object.

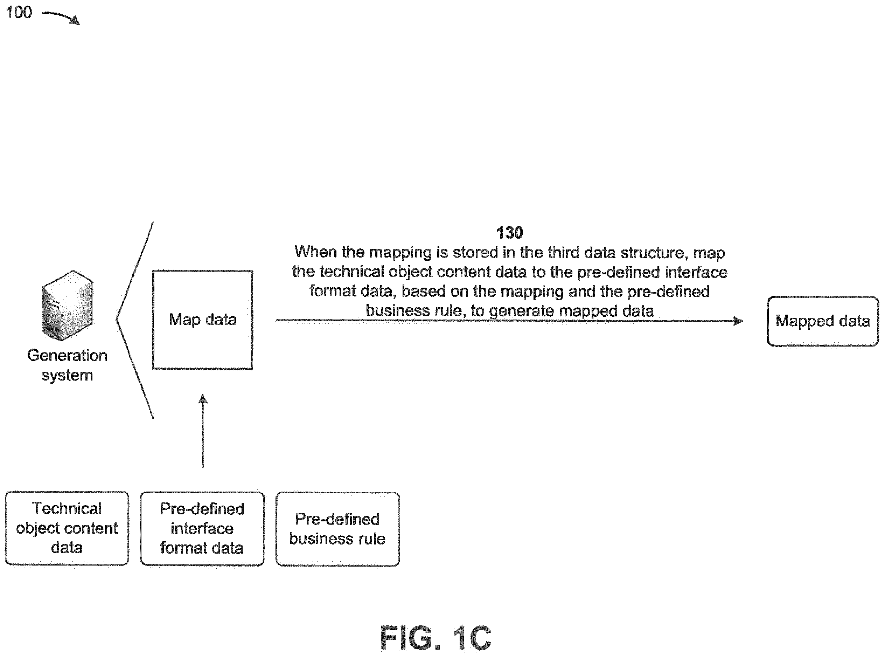

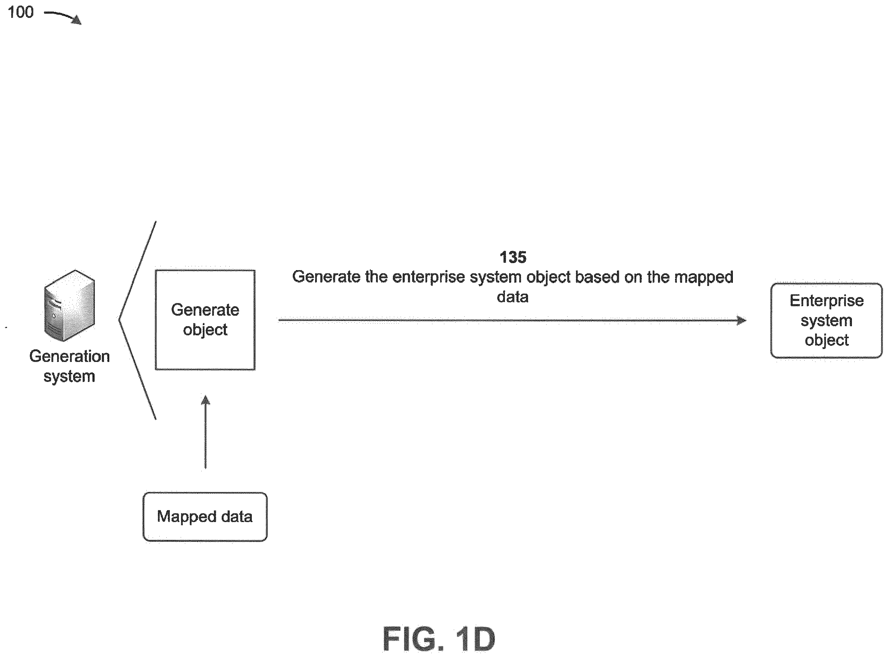

In some implementations, the mapping is stored in the third data structure. As shown in Fig. 1C, and by reference number 130, the generation system maps the technical object content data to the pre-defined interface format data, based on the mapping and the pre-defined business rule, to generate mapped data when the mapping is stored in the third data structure. The mapped data may associate a field associated with the technical object with a field associated with the pre-defined interface format data based on the mapping. The generation system may associate a business rule (e.g., a rule associated with converting data stored in the field associated with the technical object from a first format to a second format) with the field associated with the technical object and/or the field associated with the pre-defined interface format data based on the pre-defined business rule. As shown in Fig. 1D, and by reference number 135, the generation system generates the enterprise system object based on the mapped data.

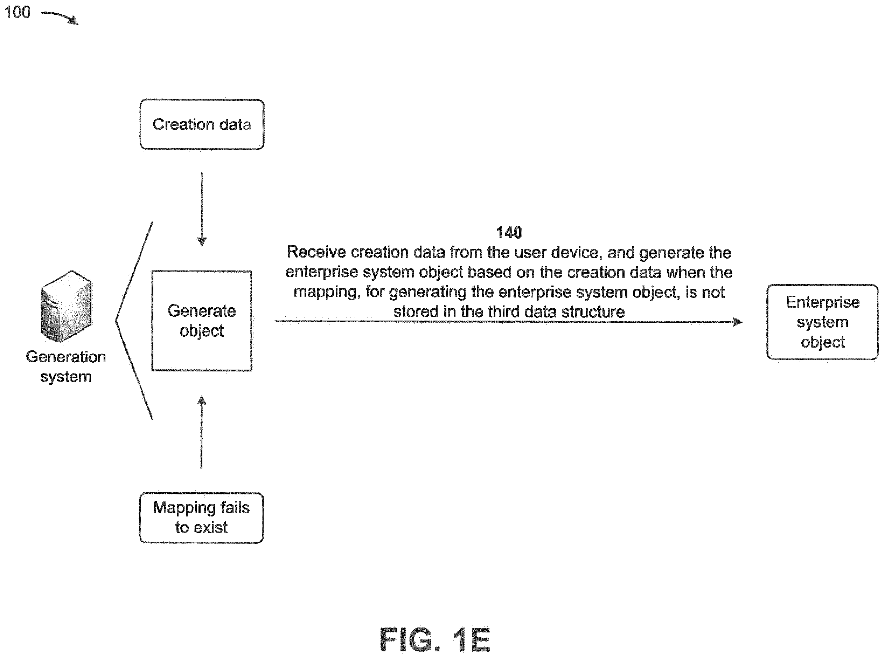

As shown in Fig. 1E, and by reference number 140, the generation system receives creation data from the user device and generates the enterprise system object based on the creation data when the mapping, for the enterprise system object, is not stored in the third data structure. The creation data may include mapping data generated by the user. For example, the user may utilize a wireframe tool to draw screens and forms. The creation data may include information identifying the screens and forms and mapping data mapping the field of data associated with the technical object to a field of a form drawn by the user with the wireframe tool. The user may cause the user device to provide the creation data to the generation system. The generation system may generate the enterprise system object based on the creation data.

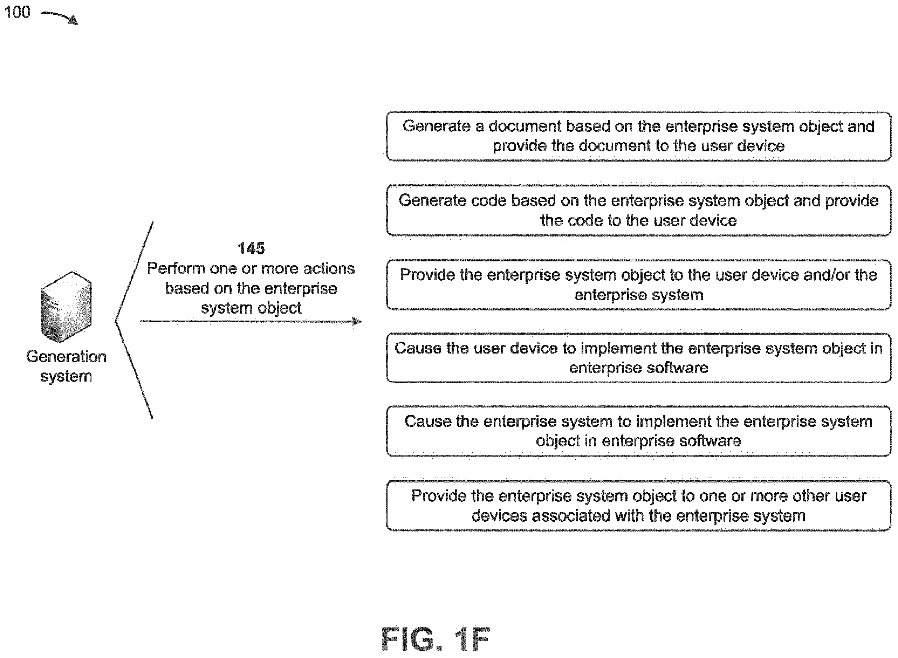

As shown in Fig. 1F, and by reference number 145, the generation system may perform one or more actions based on the enterprise system object. In some implementations, the one or more actions include the generation system generating a document based on the enterprise system object and providing the document to the user device. The generation system may identify information (e.g., a document created based on executing the enterprise system object, a technical document, a reference document, a version control document, and/or the like) associated with the enterprise system object based on the technical object, the pre-defined interface format, and/or the user request data (e.g., a document identified in the user request data). The generation system may generate a document associated with the enterprise system object based on the identified information. In this way, the generation system may provide document control documents, reference documents, technical documents, and/or the like to the user.

In some implementations, the one or more actions include the generation system generating code based on the enterprise system object and providing the code to the user device. The generation system may generate executable code for the enterprise system object and may provide the executable code to the user via the user device.

In some implementations, the one or more actions include the generation system providing the enterprise system object to the user device, the enterprise system, and/or one or more other user devices. For example, the generation system may provide the enterprise system object to the user device, the enterprise system, and/or one or more other user devices based on generating the enterprise system object. In this way, the generation system may generate a portable enterprise system object that can be shared among a plurality of different users.

In some implementations, the one or more actions include the generation system causing the user device to implement the enterprise system object in enterprise software. The generation system may provide the enterprise system object to the user device to cause the user device to implement the enterprise system object in the enterprise software. Implementing the enterprise system object in the enterprise software may cause a function associated with the enterprise system object to be performed. For example, implementing the enterprise system object in the enterprise software may cause sales data to be obtained from the enterprise system and provided to a third-party web service, may cause a report to be generated, may cause data to be converted from a first format to a second format, may cause a workflow to be executed, and/or the like. Alternatively, and/or additionally, the one or more actions may include the generation system providing the enterprise system object to the enterprise system and/or causing the enterprise system to implement the enterprise system object in the enterprise software.

In this way, the generation system may quickly and automatically generate enterprise system objects for enterprise software. For example, the generation system may map the technical object content data with the predefined interface format data based on the predefined business rule and may generate an enterprise object based on the mapped technical object content data and the predefined interface format data. Thus, the generation system conserves human resources, computing resources, networking resources, and/or the like that would otherwise have been wasted by manually generating enterprise system objects, generating enterprise system objects that cannot be shared, generating enterprise system objects that do not scale, and/or the like.

As indicated above, Figs. 1A-1F are provided as an example. Other examples may differ from what is described with regard to Figs. 1A-1F. The number and arrangement of devices shown in Figs. 1A-1F are provided as an example. In practice, there may be additional devices, fewer devices, different devices, or differently arranged devices than those shown in Figs. 1A-1F. Furthermore, two or more devices shown in Figs. 1A-1F may be implemented within a single device, or a single device shown in Figs. 1A-1F may be implemented as multiple, distributed devices. Additionally, or alternatively, a set of devices (e.g., one or more devices) shown in Figs. 1A-1F may perform one or more functions described as being performed by another set of devices shown in Figs. 1A-1F.

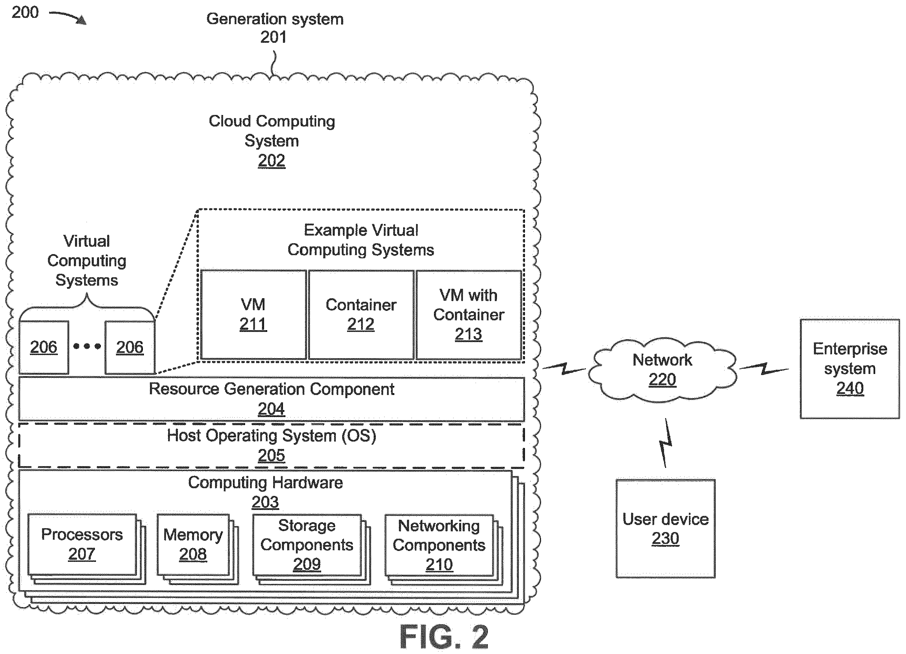

Fig. 2 is a diagram of an example environment 200 in which systems and/or methods described herein may be implemented. As shown in Fig. 2, environment 200 may include a generation system 201, which may include one or more elements of and/or may execute within a cloud computing system 202. The cloud computing system 202 may include one or more elements 203-213, as described in more detail below. As further shown in Fig. 2, environment 200 may include a network 220, a user device 230, and/or an enterprise system 240. Devices and/or elements of environment 200 may interconnect via wired connections and/or wireless connections.

The cloud computing system 202 includes computing hardware 203, a resource management component 204, a host operating system (OS) 205, and/or one or more virtual computing systems 206. The resource management component 204 may perform virtualization (e.g., abstraction) of computing hardware 203 to create the one or more virtual computing systems 206. Using virtualization, the resource management component 204 enables a single computing device (e.g., a computer, a server, and/or the like) to operate like multiple computing devices, such as by creating multiple isolated virtual computing systems 206 from computing hardware 203 of the single computing device. In this way, computing hardware 203 can operate more efficiently, with lower power consumption, higher reliability, higher availability, higher utilization, greater flexibility, and lower cost than using separate computing devices.

Computing hardware 203 includes hardware and corresponding resources from one or more computing devices. For example, computing hardware 203 may include hardware from a single computing device (e.g., a single server) or from multiple computing devices (e.g., multiple servers), such as multiple computing devices in one or more data centers. As shown, computing hardware 203 may include one or more processors 207, one or more memories 208, one or more storage components 209, and/or one or more networking components 210. Examples of a processor, a memory, a storage component, and a networking component (e.g., a communication component) are described elsewhere herein.

The resource management component 204 includes a virtualization application (e.g., executing on hardware, such as computing hardware 203) capable of virtualizing computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, and/or the like) or a virtual machine monitor, such as when the virtual computing systems 206 are virtual machines 211. Additionally, or alternatively, the resource management component 204 may include a container manager, such as when the virtual computing systems 206 are containers 212. In some implementations, the resource management component 204 executes within and/or in coordination with a host operating system 205.

A virtual computing system 206 includes a virtual environment that enables cloud-based execution of operations and/or processes described herein using computing hardware 203. As shown, a virtual computing system 206 may include a virtual machine 211, a container 212, a hybrid environment 213 that includes a virtual machine and a container, and/or the like. A virtual computing system 206 may execute one or more applications using a file system that includes binary files, software libraries, and/or other resources required to execute applications on a guest operating system (e.g., within the virtual computing system 206) or the host operating system 205.

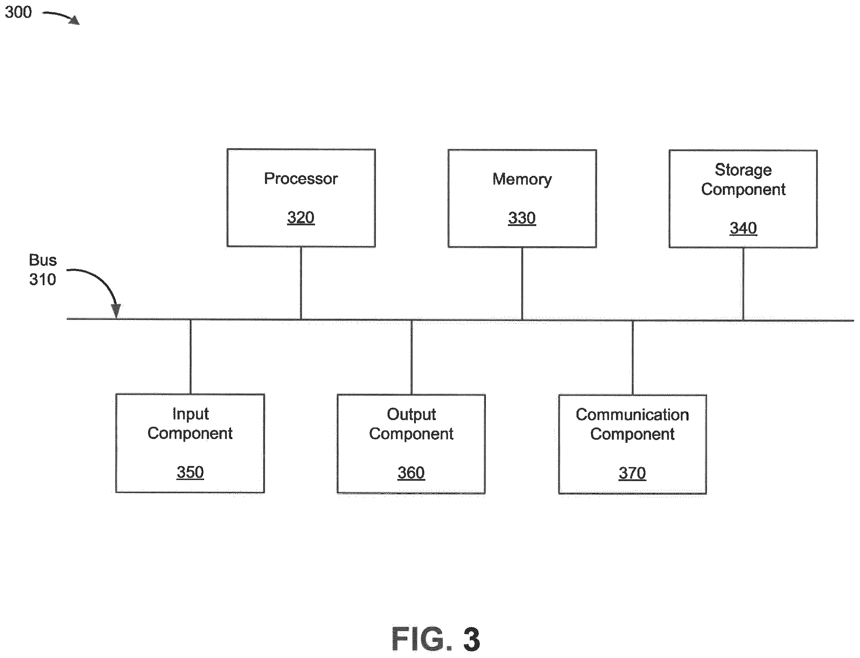

Although the generation system 201 may include one or more elements 203-213 of the cloud computing system 202, may execute within the cloud computing system 202, and/or may be hosted within the cloud computing system 202, in some implementations, the generation system 201 may not be cloud-based (e.g., may be implemented outside of a cloud computing system) or may be partially cloud-based. For example, the generation system 201 may include one or more devices that are not part of the cloud computing system 202, such as device 300 of Fig. 3, which may include a standalone server or another type of computing device. The generation system 201 may perform one or more operations and/or processes described in more detail elsewhere herein.

Network 220 includes one or more wired and/or wireless networks. For example, network 220 may include a cellular network, a public land mobile network (PLMN), a local area network (LAN), a wide area network (WAN), a private network, the Internet, and/or the like, and/or a combination of these or other types of networks. The network 220 enables communication among the devices of environment 200.

User device 230 includes one or more devices capable of receiving, generating, storing, processing, and/or providing information, as described elsewhere herein. User device 230 may include a communication device and/or a computing device. For example, user device 230 may include a wireless communication device, a user equipment (UE), a mobile phone (e.g., a smart phone or a cell phone, among other examples), a laptop computer, a tablet computer, a handheld computer, a desktop computer, a gaming device, a wearable communication device (e.g., a smart wristwatch or a pair of smart eyeglasses, among other examples), an Internet of Things (IoT) device, or a similar type of device. User device 230 may communicate with one or more other devices of environment 200, as described elsewhere herein.

Enterprise system 240 includes one or more devices capable of receiving, generating, storing, processing, providing, and/or routing information, as described elsewhere herein. Enterprise system 240 may include a communication device and/or a computing device. For example, enterprise system 240 may include a server, an application server, a client server, a web server, a database server, a host server, a proxy server, a virtual server (e.g., executing on computing hardware), a server in a cloud computing system, a device that includes computing hardware used in a cloud computing environment, or a similar type of device. Enterprise system 240 may communicate with one or more other devices of environment 200, as described elsewhere herein.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300, which may correspond to generation system 201, user device 230, and/or enterprise system 240. In some implementations, generation system 201, user device 230, and/or enterprise system 240 may include one or more devices 300 and/or one or more components of device 300. As shown in Fig. 3, device 300 may include a bus 310, a processor 320, a memory 330, a storage component 340, an input component 350, an output component 360, and a communication component 370.

Bus 310 includes a component that enables wired and/or wireless communication among the components of device 300. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform a function. Memory 330 includes a random access memory, a read only memory, and/or another type of memory (e.g., a flash memory, a magnetic memory, and/or an optical memory).

Storage component 340 stores information and/or software related to the operation of device 300. For example, storage component 340 may include a hard disk drive, a magnetic disk drive, an optical disk drive, a solid state disk drive, a compact disc, a digital versatile disc, and/or another type of non-transitory computer-readable medium. Input component 350 enables device 300 to receive input, such as user input and/or sensed inputs. For example, input component 350 may include a touch screen, a keyboard, a keypad, a mouse, a button, a microphone, a switch, a sensor, a global positioning system component, an accelerometer, a gyroscope, and/or an actuator. Output component 360 enables device 300 to provide output, such as via a display, a speaker, and/or one or more light-emitting diodes. Communication component 370 enables device 300 to communicate with other devices, such as via a wired connection and/or a wireless connection. For example, communication component 370 may include a receiver, a transmitter, a transceiver, a modem, a network interface card, and/or an antenna.

Device 300 may perform one or more processes described herein. For example, a non-transitory computer-readable medium (e.g., memory 330 and/or storage component 340) may store a set of instructions (e.g., one or more instructions, code, software code, and/or program code) for execution by processor 320. Processor 320 may execute the set of instructions to perform one or more processes described herein. In some implementations, execution of the set of instructions, by one or more processors 320, causes the one or more processors 320 and/or the device 300 to perform one or more processes described herein. In some implementations, hardwired circuitry may be used instead of or in combination with the instructions to perform one or more processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

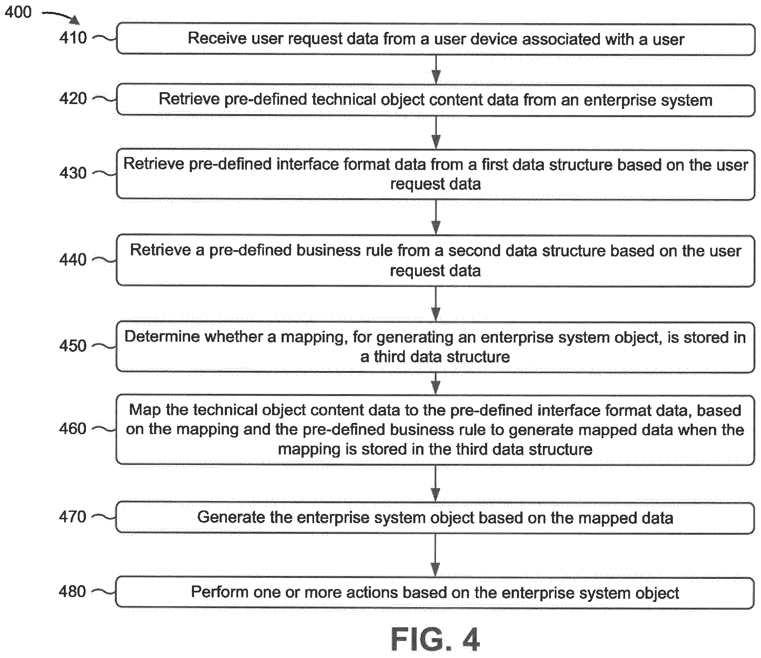

Fig. 4 is a flowchart of an example process 400 for generating WRICEF objects for enterprise software. In some implementations, one or more process blocks of Fig. 4 may be performed by a device (e.g., generation system 201). In some implementations, one or more process blocks of Fig. 4 may be performed by another device or a group of devices separate from or including the device, such as a user device (e.g., user device 230) and/or an enterprise system (e.g., enterprise system 240). Additionally, or alternatively, one or more process blocks of Fig. 4 may be performed by one or more components of device 300, such as processor 320, memory 330, storage component 340, input component 350, output component 360, and/or communication component 370.

As shown in Fig. 4, process 400 may include receiving user request data from a user device associated with a user (block 410). For example, the device may receive user request data from a user device associated with a user, as described above. The user request data may include a recording of activities performed by the user with the user device.

As further shown in Fig. 4, process 400 may include retrieving pre-defined technical object content data from an enterprise system (block 420). For example, the device may retrieve pre-defined technical object content data from an enterprise system based on the user request data, as described above.

As further shown in Fig. 4, process 400 may include retrieving pre-defined interface format data from a first data structure based on the user request data (block 430). For example, the device may retrieve pre-defined interface format data from a first data structure based on the user request data, as described above.

As further shown in Fig. 4, process 400 may include retrieving a pre-defined business rule from a second data structure based on the user request data (block 440). For example, the device may retrieve a pre-defined business rule from a second data structure based on the user request data, as described above.

As further shown in Fig. 4, process 400 may include determining whether a mapping, for generating an enterprise system object, is stored in a third data structure (block 450). For example, the device may determine whether a mapping, for generating an enterprise system object, in a third data structure, as described above.

In some implementations, the enterprise system object may include a WRICEF object. Alternatively, and/or additionally, the enterprise system object may include a custom enhancement for enterprise software, and configuration units that group configuration data, development data, and documentation associated with the custom enhancement. Alternatively, and/or additionally, the enterprise system object may include one or more of a report for enterprise software, an outbound user interface for the enterprise software, an inbound user interface for the enterprise software, a conversion user interface for the enterprise software, an enhancement to a standard user interface for the enterprise software, an enhancement to a new user interface application for the enterprise software, a business intelligence transformation process for the enterprise software, a form for the enterprise software, or a workflow for the enterprise software.

As further shown in Fig. 4, process 400 may include mapping the technical object content data to the pre-defined interface format data, based on the mapping and the pre-defined business rule to generate mapped data when the mapping is stored in the third data structure (block 460). For example, the device may map the technical object content data to the pre-defined interface format data, based on the mapping and the pre-defined business rule to generate mapped data when the mapping is stored in the third data structure, as described above.

As further shown in Fig. 4, process 400 may include generating the enterprise system object based on the mapped data when the mapping, for generating the enterprise system object, exists in the mapped data (block 470). For example, the device may generate the enterprise system object based on the mapped data, as described above. In some implementations, the device may utilize a wireframe tool to generate the enterprise system object.

In some implementations, the device may receive creation data from the user device when the mapping, for generating the enterprise system object, is not stored in the third data structure. The device may generate the enterprise system object based on the creation data.

As further shown in Fig. 4, process 400 may include performing one or more actions based on the enterprise system object (block 480). For example, the device may perform one or more actions based on the enterprise system object, as described above. In some implementations, performing the one or more actions may comprise one or more of generating a document based on the enterprise system object and providing the document to the user device, generating code based on the enterprise system object and providing the code to the user device, or providing the enterprise system object to the user device or the enterprise system.

Alternatively, and/or additionally, performing the one or more actions may comprise one or more of causing the user device to implement the enterprise system object in enterprise software, causing the enterprise system to implement the enterprise system object in enterprise software, or providing the enterprise system object to one or more other user devices associated with the enterprise system. In some implementations, performing the one or more actions may comprise continuously testing the enterprise system object.

In some implementations, the device may generate code based on the enterprise system object. The device may generate a technical document based on the enterprise system object. The technical document may be associated with the code. The generation system may cause the user device and/or the enterprise system to implement the code in enterprise software based on the technical document.

In some implementations, the device may provide the mapped data, for display, to the user device. The device may receive, from the user device, an edit to the mapped data. The device may update the mapped data based on the edit to the mapped data.

In some implementations, the device may receive, from the user device, a modification to the enterprise system object. The device may generate a modified enterprise system object based on the modification. The device may cause the user device and/or the enterprise system to implement the modified enterprise system object in enterprise software.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, and/or the like, depending on the context

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A method for generating enterprise system objects for enterprise software, the method comprising:
receiving, by a device, user request data from a user device (230) associated with a user,
wherein the user request data includes information identifying a name of an enterprise system object, a description of the enterprise system object, a type of the enterprise system object and a technical object associated with the enterprise system object,
wherein the enterprise system object includes a workflow, report, interface, conversion, enhancement, and forms, WRICEF, object,
wherein the technical object includes a function module comprising a sub-program for performing a function, the sub-program including a set of reusable statements with importing parameters and/or exporting parameters, and
wherein the enterprise system object is configured to call the technical object to execute the sub-program to cause the function to be performed;
retrieving, by the device, pre-defined technical object content data from an enterprise system (240) based on the user request data,
wherein the pre-defined technical object content data includes information associated with data obtained by the function associated with the technical object,
wherein said retrieving of the pre-defined technical object content data includes:
determining the technical object identified by the information included in the user request data,
requesting the technical object from the enterprise system (240), and
receiving the pre-defined technical object content data provided by the enterprise system (240) in response to the request;
retrieving, by the device, pre-defined interface format data from a first data structure based on the user request data;
retrieving, by the device, a pre-defined business rule from a second data structure based on the user request data;
determining, by the device, whether a mapping, for generating the enterprise system object, is stored in a third data structure;
when the mapping, for generating the enterprise system object, is stored in the third data structure,
mapping, by the device, the technical object content data to the pre-defined interface format data, based on the mapping and the pre-defined business rule, to generate mapped data, and
generating, by the device, the enterprise system object based on the mapped data;
when the mapping, for generating the enterprise system object, is not stored in the third data structure,
receiving creation data from the user device (230), and
generating the enterprise system object based on the creation data; and
performing, by the device, one or more actions based on the enterprise system object, the one or more actions comprising generating code based on the enterprise system object and providing the code to the user device.

2. The method of claim 1, wherein performing the one or more actions comprises one or more of:
generating a document based on the enterprise system object and providing the document to the user device; or
providing the enterprise system object to the user device or the enterprise system.

3. The method of any one of the preceding claims, wherein performing the one or more actions comprises one or more of:
causing the user device to implement the enterprise system object in the enterprise software;
causing the enterprise system to implement the enterprise system object in the enterprise software; or
providing the enterprise system object to one or more other user devices associated with the enterprise system.

4. The method of any one of the preceding claims, wherein the enterprise system object includes:
a custom enhancement for the enterprise software, and
configuration units that group configuration data, development data, and documentation associated with the custom enhancement.

5. The method of any one of the preceding claims, further comprising:
continuously testing the enterprise system object.

6. A device for generating enterprise system objects for enterprise software, the device comprising:
one or more memories; and
one or more processors, communicatively coupled to the one or more memories, configured to:
receive user request data from a user device (230) associated with a user,
wherein the user request data includes information identifying a name of an enterprise system object, a description of the enterprise system object, a type of the enterprise system object and a technical object associated with the enterprise system object,
wherein the enterprise system object includes a workflow, report, interface, conversion, enhancement, and forms, WRICEF, object,
wherein the technical object includes a function module comprising a sub-program for performing a function, the sub-program including a set of reusable statements with importing parameters and/or exporting parameters, and
wherein the enterprise system object is configured to call the technical object to execute the sub-program to cause the function to be performed;
retrieve pre-defined technical object content data from an enterprise system (240),
wherein the pre-defined technical object content data includes information associated with data obtained by the function associated with the technical object,
wherein said retrieval of the pre-defined technical object content data includes:
determining the technical object identified by the information included in the user request data,
requesting the technical object from the enterprise system (240), and
receiving the pre-defined technical object content data provided by the enterprise system (240) in response to the request;
retrieve pre-defined interface format data from a first data structure based on the user request data;
retrieve a pre-defined business rule from a second data structure based on the user request data;
determine whether a mapping, for generating the enterprise system object, is stored in a third data structure;
selectively:
map the technical object content data to the pre-defined interface format data, based on the mapping and the pre-defined business rule to generate mapped data and generate the enterprise system object based on the mapped data when the mapping, for generating the enterprise system object, is stored in the third data structure, or
generate the enterprise system object based on creation data received from the user device (230) when the mapping, for generating the enterprise system object, is not stored in the third data structure; and
perform one or more actions based on the enterprise system object, the one or more actions comprising generating code based on the enterprise system object and providing the code to the user device.

7. The device of claim 6, wherein the one or more processors are further configured to:
receive, from the user device, a modification to the enterprise system object;
generate a modified enterprise system object based on the modification; and
cause the user device or the enterprise system to implement the modified enterprise system object in the enterprise software.

8. The device of claim 6 or 7, wherein the enterprise system object includes one or more of:
a report for the enterprise software,
an outbound user interface for the enterprise software,
an inbound user interface for the enterprise software,
a conversion user interface for the enterprise software,
an enhancement to a standard user interface for the enterprise software,
an enhancement to a new user interface application for the enterprise software,
a business intelligence transformation process for the enterprise software,
a form for the enterprise software, or
a workflow for the enterprise software.

9. The device of any one of the preceding claims 6 to 8, wherein the one or more processors are further configured to:
provide the mapped data, for display, to the user device;
receive, from the user device, an edit to the mapped data; and
update the mapped data based on the edit to the mapped data.

10. The device of any one of the preceding claims 6 to 9, wherein the one or more processors, when generating the enterprise system object based on the mapped data, are configured to:
utilize a wireframe tool to generate the enterprise system object.

11. The device of any one of the preceding claims 6 to 10, wherein the one or more processors, when performing the one or more actions, are configured to:
generate a technical document based on the enterprise system object,
wherein the technical document is associated with the code; and
cause the user device or the enterprise system to implement the code in the enterprise software based on the technical document.

12. The device of any one of the preceding claims 6 to 11, wherein the user request data includes a recording of activities performed by the user with the user device.

13. A computer program product comprising computer-readable instructions which, when loaded and executed on a suitable system perform the steps of a method according to any one of the claims 1 to 5.

## Patentansprüche

1. Verfahren zum Erzeugen von Unternehmenssystemobjekten für Unternehmenssoftware, wobei das Verfahren folgende Vorgänge umfasst:
Empfangen, durch eine Vorrichtung, von Benutzeranforderungsdaten von einem Benutzergerät (230), das einem Benutzer zugeordnet ist,
wobei die Benutzeranforderungsdaten Informationen beinhalten, die einen Namen eines Unternehmenssystemobjekts, eine Beschreibung des Unternehmenssystemobjekts, eine Art des Unternehmenssystemobjekts und ein dem Unternehmenssystemobjekt zugeordnetes technisches Objekt identifizieren,
wobei das Unternehmenssystemobjekt ein Arbeitsablauf-, Berichts-, Schnittstellen-, Konvertierungs-, Erweiterungs- und Formular-, WRICEF-, Objekt beinhaltet, wobei das technische Objekt ein Funktionsmodul beinhaltet, das ein Unterprogramm zum Durchführen einer Funktion umfasst, wobei das Unterprogramm einen Satz von wiederverwendbaren Ausdrücken mit Importparametern und/oder Exportparametern beinhaltet, und
wobei das Unternehmenssystemobjekt dafür ausgelegt ist, das technische Objekt zum Ausführen des Unterprogramms zum Veranlasssen der Durchführung der Funktion aufzurufen;
Abrufen, durch die Vorrichtung, von vordefinierten Inhaltsdaten des technischen Objekts aus einem Unternehmenssystem (240) auf der Grundlage der Benutzeranforderungsdaten,
wobei die vordefinierten Inhaltsdaten des technischen Objekts Informationen beinhalten, die Daten zugeordnet sind, die durch die dem technischen Objekt zugeordnete Funktion erhalten werden,
wobei das Abrufen der vordefinierten Inhaltsdaten des technischen Objekts beinhaltet:
Bestimmen des technischen Objekts, das durch die in den Benutzeranforderungsdaten beinhalteten Informationen identifiziert wird,
Anfordern des technischen Objekts vom Unternehmenssystem (240), und Empfangen der vordefinierten Inhaltsdaten des technischen Objekts, die vom Unternehmenssystem (240) als Reaktion auf die Anforderung bereitgestellt werden;
Abrufen, durch die Vorrichtung, von vordefinierten Schnittstellenformatdaten aus einer ersten Datenstruktur auf der Grundlage der Benutzeranforderungsdaten;
Abrufen, durch die Vorrichtung, einer vordefinierten Geschäftsregel aus einer zweiten Datenstruktur auf der Grundlage der Benutzeranforderungsdaten;
Bestimmen, durch die Vorrichtung, ob eine Abbildung zum Erzeugen des Unternehmenssystemobjekts in einer dritten Datenstruktur gespeichert ist;
wenn die Abbildung zum Erzeugen des Unternehmenssystemobjekts in der dritten Datenstruktur gespeichert ist,
Abbilden, durch die Vorrichtung, der Inhaltsdaten des technischen Objekts auf die vordefinierten Schnittstellenformatdaten auf der Grundlage der Abbildung und der vordefinierten Geschäftsregel zum Erzeugen von abgebildeten Daten, und
Erzeugen, durch die Vorrichtung, des Unternehmenssystemobjekts auf der Grundlage der abgebildeten Daten;
wenn die Abbildung zum Erzeugen des Unternehmenssystemobjekts in der dritten Datenstruktur nicht gespeichert ist,
Empfangen von Erstellungsdaten vom Benutzergerät (230), und
Erzeugen des Unternehmenssystemobjekts auf der Grundlage der Erstellungsdaten; und Durchführen, durch die Vorrichtung, einer oder mehrerer Aktionen auf der Grundlage des Unternehmenssystemobjekts, wobei die eine oder die mehreren Aktionen das Erzeugen von Code auf der Grundlage des Unternehmenssystemobjekts und das Bereitstellen des Codes für das Benutzergerät umfassen.

2. Verfahren nach Anspruch 1, wobei das Durchführen der einen oder der mehreren Aktionen einen oder mehrere der folgenden Vorgänge umfasst:
Erzeugen eines Dokuments auf der Grundlage des Unternehmenssystemobjekts und Bereitstellen des Dokuments für das Benutzergerät; oder
Bereitstellen des Unternehmenssystemobjekts für das Benutzergerät oder das Unternehmenssystem.

3. Verfahren nach einem der vorhergehenden Ansprüche, wobei das Durchführen der einen oder der mehreren Aktionen einen oder mehrere der folgenden Vorgänge umfasst:
Veranlassen des Benutzergeräts, das Unternehmenssystemobjekt in der Unternehmenssoftware zu implementieren;
Veranlassen des Unternehmenssystems, das Unternehmenssystemobjekt in der Unternehmenssoftware zu implementieren; oder
Bereitstellen des Unternehmenssystemobjekts für ein oder mehrere andere Benutzergeräte, die dem Unternehmenssystem zugeordnet sind.

4. Verfahren nach einem der vorhergehenden Ansprüche, wobei das Unternehmenssystemobjekt beinhaltet:
eine individuelle Erweiterung für die Unternehmenssoftware, und
Auslegungseinheiten, die Auslegungsdaten, Entwicklungsdaten und die der individuellen Erweiterung zugehörige Dokumentation gruppieren.

5. Verfahren nach einem der vorhergehenden Ansprüche, ferner umfassend: kontinuierliches Prüfen des Unternehmenssystemobjekts.

6. Vorrichtung zum Erzeugen von Unternehmenssystemobjekten für Unternehmenssoftware, wobei die Vorrichtung folgende Elemente umfasst:
einen oder mehrere Speicher; und
einen oder mehrere Prozessoren, die kommunikativ mit dem einen oder den mehreren Speichern gekoppelt sind und für folgende Vorgänge ausgelegt sind:
Empfangen von Benutzeranforderungsdaten von einem Benutzergerät (230), das einem Benutzer zugeordnet ist, wobei die Benutzeranforderungsdaten Informationen beinhalten, die einen Namen eines Unternehmenssystemobjekts, eine Beschreibung des Unternehmenssystemobjekts, eine Art des Unternehmenssystemobjekts und ein dem Unternehmenssystemobjekt zugeordnetes technisches Objekt identifizieren,
wobei das Unternehmenssystemobjekt ein Arbeitsablauf-, Berichts-, Schnittstellen-, Konvertierungs-, Erweiterungs- und Formular-, WRICEF-, Objekt beinhaltet, wobei das technische Objekt ein Funktionsmodul beinhaltet, das ein Unterprogramm zum Durchführen einer Funktion umfasst, wobei das Unterprogramm einen Satz von wiederverwendbaren Ausdrücken mit Importparametern und/oder Exportparametern beinhaltet, und
wobei das Unternehmenssystemobjekt dafür ausgelegt ist, das technische Objekt zum Ausführen des Unterprogramms zum Veranlasssen der Durchführung der Funktion aufzurufen;
Abrufen von vordefinierten Inhaltsdaten des technischen Objekts aus einem Unternehmenssystem (240),
wobei die vordefinierten Inhaltsdaten des technischen Objekts Informationen beinhalten, die Daten zugeordnet sind, die durch die dem technischen Objekt zugeordnete Funktion erhalten werden,
wobei das Abrufen der vordefinierten Inhaltsdaten des technischen Objekts beinhaltet:
Bestimmen des technischen Objekts, das durch die in den Benutzeranforderungsdaten beinhalteten Informationen identifiziert wird,
Anfordern des technischen Objekts vom Unternehmenssystem (240), und
Empfangen der vordefinierten Inhaltsdaten des technischen Objekts, die vom Unternehmenssystem (240) als Reaktion auf die Anforderung bereitgestellt werden;
Abrufen von vordefinierten Schnittstellenformatdaten aus einer ersten Datenstruktur auf der Grundlage der Benutzeranforderungsdaten;
Abrufen einer vordefinierten Geschäftsregel aus einer zweiten Datenstruktur auf der Grundlage der Benutzeranforderungsdaten;
Bestimmen, ob eine Abbildung zum Erzeugen des Unternehmenssystemobjekts in einer dritten Datenstruktur gespeichert ist;
selektiv:
Abbilden der Inhaltsdaten des technischen Objekts auf die vordefinierten Schnittstellenformatdaten auf der Grundlage der Abbildung und der vordefinierten Geschäftsregel zum Erzeugen von abgebildeten Daten und Erzeugen des Unternehmenssystemobjekts auf der Grundlage der abgebildeten Daten, wenn die Abbildung zum Erzeugen des Unternehmenssystemobjekts in der dritten Datenstruktur gespeichert ist, oder
Erzeugen des Unternehmenssystemobjekts auf der Grundlage von Erstellungsdaten, die vom Benutzergerät (230) empfangen wurden, wenn die Abbildung zum Erzeugen des Unternehmenssystemobjekts nicht in der dritten Datenstruktur gespeichert ist; und
Durchführen einer oder mehrerer Aktionen auf der Grundlage des Unternehmenssystemobjekts, wobei die eine oder die mehreren Aktionen das Erzeugen von Code auf der Grundlage des Unternehmenssystemobjekts und das Bereitstellen des Codes für das Benutzergerät umfassen.

7. Vorrichtung nach Anspruch 6, wobei der eine oder die mehreren Prozessoren ferner für folgende Vorgänge ausgelegt sind:
Empfangen, vom Benutzergerät, einer Modifikation am Unternehmenssystemobjekt;
Erzeugen eines modifizierten Unternehmenssystemobjekts auf der Grundlage der Modifikation; und
Veranlassen des Benutzergeräts oder des Unternehmenssystems, das modifizierte Unternehmenssystemobjekt in der Unternehmenssoftware zu implementieren.

8. Vorrichtung nach Anspruch 6 oder 7, wobei das Unternehmenssystemobjekt eines oder mehrere der folgenden Elemente beinhaltet:
einen Bericht für die Unternehmenssoftware,
eine Ausgangs-Benutzerschnittstelle für die Unternehmenssoftware,
eine Eingangs-Benutzerschnittstelle für die Unternehmenssoftware,
eine Konvertierungs-Benutzerschnittstelle für die Unternehmenssoftware,
eine Erweiterung einer Standard-Benutzerschnittstelle für die Unternehmenssoftware,
eine Erweiterung einer neuen Benutzerschnittstellenanwendung für die Unternehmenssoftware,
einen Geschäftsanalytik-Transformationsprozess für die Unternehmenssoftware,
ein Formular für die Unternehmenssoftware, oder
einen Arbeitsablauf für die Unternehmenssoftware.

9. Vorrichtung nach einem der vorhergehenden Ansprüche 6 bis 8, wobei der eine oder die mehreren Prozessoren ferner für folgende Vorgänge ausgelegt sind:
Bereitstellen der abgebildeten Daten zur Anzeige auf dem Benutzergerät;
Empfangen, vom Benutzergerät, einer Bearbeitung der abgebildeten Daten; und
Aktualisieren der abgebildeten Daten auf der Grundlage der Bearbeitung der abgebildeten Daten.

10. Vorrichtung nach einem der vorhergehenden Ansprüche 6 bis 9, wobei der eine oder die mehreren Prozessoren beim Erzeugen des Unternehmenssystemobjekts auf der Grundlage der abgebildeten Daten für folgenden Vorgang ausgelegt ist:
Verwenden eines Drahtmodell-Werkzeugs zum Erstellen des Unternehmenssystemobjekts.

11. Vorrichtung nach einem der vorhergehenden Ansprüche 6 bis 10, wobei der eine oder die mehreren Prozessoren beim Durchführen der einen oder der mehreren Aktionen für folgende Vorgänge ausgelegt ist:
Erzeugen eines technischen Dokuments auf der Grundlage des Unternehmenssystemobjekts,
wobei das technische Dokument dem Code zugeordnet ist; und
Veranlassen des Benutzergeräts oder des Unternehmenssystems, den Code in der Unternehmenssoftware auf der Grundlage des technischen Dokuments zu implementieren.

12. Vorrichtung nach einem der vorhergehenden Ansprüche 6 bis 11, wobei die Benutzeranforderungsdaten eine Aufzeichnung der vom Benutzer mit dem Benutzergerät durchgeführten Aktivitäten beinhalten.

13. Computerprogrammprodukt, umfassend computerlesbare Anweisungen, die, wenn sie auf ein geeignetes System geladen und darauf ausgeführt werden, die Schritte eines Verfahrens nach einem der Ansprüche 1 bis 5 durchführen.

## Revendications

1. Procédé de génération d'objets de système d'entreprise pour un logiciel d'entreprise, le procédé comprenant :
la réception, par un dispositif, de données de demande d'utilisateur en provenance d'un dispositif d'utilisateur (230) associé à un utilisateur,
dans lequel les données de demande d'utilisateur comportent des informations identifiant un nom d'un objet de système d'entreprise, une description de l'objet de système d'entreprise, un type de l'objet de système d'entreprise et un objet technique associé à l'objet de système d'entreprise,
dans lequel l'objet de système d'entreprise comporte un objet de flux de travail, rapport, interface, conversion, amélioration et formulaires, WRICEF,
dans lequel l'objet technique comporte un module de fonction comprenant un sous-programme pour la réalisation d'une fonction, le sous-programme comportant un ensemble de déclarations réutilisables avec des paramètres d'importation et/ou des paramètres d'exportation, et
dans lequel l'objet de système d'entreprise est configuré pour appeler l'objet technique afin d'exécuter le sous-programme pour procéder à la réalisation de la fonction ;
la récupération, par le dispositif, de données de contenu d'objet technique prédéfinies à partir d'un système d'entreprise (240) en fonction des données de demande d'utilisateur,
dans lequel les données de contenu d'objet technique prédéfinies comportent des informations associées à des données obtenues par la fonction associée à l'objet technique,
dans lequel ladite récupération des données de contenu d'objet technique prédéfinies comprend :
la détermination de l'objet technique identifié par les informations incluses dans les données de demande d'utilisateur,
la demande de l'objet technique auprès du système d'entreprise (240), et
la réception des données de contenu d'objet technique prédéfinies fournies par le système d'entreprise (240) en réponse à la demande ;
la récupération, par le dispositif, de données de format d'interface prédéfinies à partir d'une première structure de données en fonction des données de demande d'utilisateur ;
la récupération, par le dispositif, d'une règle professionnelle prédéfinie à partir d'une deuxième structure de données en fonction des données de demande d'utilisateur ;
la détermination, par le dispositif, qu'un mappage, pour générer l'objet de système d'entreprise, est stocké ou non dans une troisième structure de données ;
lorsque le mappage, pour générer l'objet de système d'entreprise, est stocké dans la troisième structure de données,
le mappage, par le dispositif, des données de contenu d'objet technique sur les données de format d'interface prédéfinies, en fonction du mappage et de la règle professionnelle prédéfinie, pour générer des données mappées, et
la génération, par le dispositif, de l'objet de système d'entreprise en fonction des données mappées ;
lorsque le mappage, pour générer l'objet de système d'entreprise, n'est pas stocké dans la troisième structure de données,
la réception de données de création en provenance du dispositif utilisateur (230), et
la génération de l'objet de système d'entreprise en fonction des données de création ; et
la réalisation, par le dispositif, d'une ou plusieurs actions en fonction de l'objet de système d'entreprise, les une ou plusieurs actions comprenant la génération d'un code en fonction de l'objet de système d'entreprise et la fourniture du code au dispositif utilisateur.

2. Procédé selon la revendication 1, dans lequel la réalisation d'une ou plusieurs actions comprend une ou plusieurs des actions suivantes :
la génération d'un document en fonction de l'objet de système d'entreprise et la fourniture du document au dispositif d'utilisateur ; ou
la fourniture de l'objet de système d'entreprise au dispositif d'utilisateur ou au système d'entreprise.

3. Procédé selon l'une quelconque des revendications précédentes, dans lequel la réalisation des une ou plusieurs actions comprend une ou plusieurs des actions suivantes :
l'action d'amener le dispositif d'utilisateur à mettre en œuvre l'objet de système d'entreprise dans le logiciel d'entreprise ;
l'action d'amener le système d'entreprise à mettre en œuvre l'objet de système d'entreprise dans le logiciel d'entreprise ; ou
la fourniture de l'objet de système d'entreprise à un ou plusieurs autres dispositifs utilisateurs associés au système d'entreprise.

4. Procédé selon l'une quelconque des revendications précédentes, dans lequel l'objet du système d'entreprise comporte :
une amélioration personnalisée du logiciel d'entreprise, et
des unités de configuration qui regroupent des données de configuration, des données de développement et une documentation associées à l'amélioration personnalisée.

5. Procédé selon l'une quelconque des revendications précédentes, comprenant en outre :
un test continu de l'objet de système d'entreprise.

6. Dispositif de génération d'objets de système d'entreprise pour un logiciel d'entreprise, le dispositif comprenant :
une ou plusieurs mémoires ; et
un ou plusieurs processeurs, couplés de manière communicative aux une ou plusieurs mémoires, configurés pour :
recevoir des données de demande d'utilisateur en provenance d'un dispositif d'utilisateur (230) associé à un utilisateur,
dans lequel les données de demande d'utilisateur comportent des informations identifiant un nom d'un objet de système d'entreprise, une description de l'objet de système d'entreprise, un type de l'objet de système d'entreprise et un objet technique associé à l'objet de système d'entreprise,
dans lequel l'objet de système d'entreprise comporte un objet de flux de travail, rapport, interface, conversion, amélioration et formulaires, WRICEF,
dans lequel l'objet technique comporte un module de fonction comprenant un sous-programme pour la réalisation d'une fonction, le sous-programme comportant un ensemble de déclarations réutilisables avec des paramètres d'importation et/ou des paramètres d'exportation, et
dans lequel l'objet de système d'entreprise est configuré pour appeler l'objet technique afin d'exécuter le sous-programme pour procéder à la réalisation de la fonction ;
récupérer des données de contenu d'objet technique prédéfinies à partir d'un système d'entreprise (240),
dans lequel les données de contenu d'objet technique prédéfinies comportent des informations associées à des données obtenues par la fonction associée à l'objet technique,
dans lequel ladite récupération des données de contenu d'objet technique prédéfinies comporte :
la détermination de l'objet technique identifié par les informations incluses dans les données de demande d'utilisateur,
la demande de l'objet technique auprès du système d'entreprise (240), et
la réception des données de contenu d'objet technique prédéfinies fournies par le système d'entreprise (240) en réponse à la demande ;
récupérer des données de format d'interface prédéfinies à partir d'une première structure de données en fonction des données de demande d'utilisateur ;
récupérer une règle professionnelle prédéfinie à partir d'une deuxième structure de données en fonction des données de demande d'utilisateur ;
déterminer qu'un mappage, pour générer l'objet de système d'entreprise, est stocké ou non dans une troisième structure de données ;
sélectivement :
mapper les données de contenu d'objet technique sur les données de format d'interface prédéfini, en fonction du mappage et de la règle professionnelle prédéfinie pour générer des données mappées et générer l'objet de système d'entreprise en fonction des données mappées lorsque le mappage, pour générer l'objet de système d'entreprise, est stocké dans la troisième structure de données, ou
générer l'objet de système d'entreprise en fonction de données de création reçues en provenance du dispositif utilisateur (230) lorsque le mappage, pour la génération de l'objet de système d'entreprise, n'est pas stocké dans la troisième structure de données ; et
réaliser une ou plusieurs actions en fonction de l'objet de système d'entreprise, les une ou plusieurs actions comprenant la génération d'un code en fonction de l'objet de système d'entreprise et la fourniture du code au dispositif d'utilisateur.

7. Dispositif selon la revendication 6, dans lequel les un ou plusieurs processeurs sont configurés en outre pour :
recevoir, en provenance du dispositif d'utilisateur, une modification de l'objet de système d'entreprise ;
générer un objet système d'entreprise modifié en fonction de la modification ; et
amener le dispositif d'utilisateur ou le système d'entreprise à mettre en œuvre l'objet de système d'entreprise modifié dans le logiciel d'entreprise.

8. Dispositif selon la revendication 6 ou 7, dans lequel l'objet du système d'entreprise comporte un ou plusieurs des éléments suivants :
un rapport pour le logiciel d'entreprise,
une interface utilisateur sortante pour le logiciel d'entreprise,
une interface utilisateur entrante pour le logiciel d'entreprise,
une interface utilisateur de conversion pour le logiciel d'entreprise,
une amélioration d'une interface utilisateur standard pour le logiciel d'entreprise,
une amélioration d'une nouvelle application d'interface utilisateur pour le logiciel d'entreprise,
un processus de transformation d'informatique décisionnelle pour le logiciel d'entreprise,
un formulaire pour le logiciel d'entreprise, ou
un flux de travail pour le logiciel d'entreprise.

9. Dispositif selon l'une quelconque des revendications précédentes 6 à 8, dans lequel les un ou plusieurs processeurs sont configurés en outre pour :
fournir les données mappées, en vue de leur affichage, au dispositif d'utilisateur ;
recevoir, en provenance du dispositif d'utilisateur, une modification des données mappées ; et
mettre à jour les données mappées en fonction de la modification des données mappées.

10. Dispositif selon l'une quelconque des revendications précédentes 6 à 9, dans lequel les un ou plusieurs processeurs, lors de la génération de l'objet du système d'entreprise en fonction des données mappées, sont configurés pour :
utiliser un outil d'ébauche structurelle pour générer l'objet de système d'entreprise.

11. Dispositif selon l'une quelconque des revendications précédentes 6 à 10, dans lequel les un ou plusieurs processeurs, lorsqu'ils réalisent les une ou plusieurs actions, sont configurés pour :
générer un document technique en fonction de l'objet de système d'entreprise,
dans lequel le document technique est associé au code ; et
amener le dispositif d'utilisateur ou le système d'entreprise à mettre en œuvre le code dans le logiciel d'entreprise en fonction du document technique.

12. Dispositif selon l'une quelconque des revendications précédentes 6 à 11, dans lequel les données de demande d'utilisateur comportent un enregistrement d'activités réalisées par l'utilisateur avec le dispositif d'utilisateur.

13. Produit programme d'ordinateur comprenant des instructions lisibles par ordinateur qui, lorsqu'elles sont chargées et exécutées sur un système approprié, réalisent les étapes d'un procédé selon l'une quelconque des revendications 1 à 5.
